Europäisches Patentamt

European Patent Office

Office européen des brevets

(19)

(11) Publication number: **0 522 233 B1**

# EUROPEAN PATENT SPECIFICATION

(45) Date of publication of patent specification: **07.06.95**  (51) Int. Cl.⁶: **C08F 255/02**

(21) Application number: **92102484.0**

(22) Date of filing: **14.02.92**

The file contains technical information submitted after the application was filed and not included in this specification

(54) **Impact resistant graft copolymers.**

(30) Priority: **07.03.91 US 666112**

(43) Date of publication of application:
**13.01.93 Bulletin 93/02**

(45) Publication of the grant of the patent:
**07.06.95 Bulletin 95/23**

(84) Designated Contracting States:
**AT BE CH DE DK FR GB IT LI LU NL SE**

(56) References cited:
**EP-A- 0 295 821
EP-A- 0 418 861
GB-A- 1 312 325
JP-A-61 073 711**

**WORLD PATENTS INDEX LATEST Derwent
Publications Ltd., London, GB; AN 83-13634K
& JP-A-57 211 157 (MITSUI TOATSU CHEM
INC) 24 December 1982.**

**WORLD PATENTS INDEX LATEST Derwent
Publications Ltd., London, GB; AN 87-330604
& JP-A-62 235 331 (KANEGAFUCHI CHEM KK)
15 October 1987.**

(73) Proprietor: **Himont Incorporated
Three Little Falls Centre
2801 Centerville Road
P.O. Box 15439
Wilmington
Delaware 19850-5439 (US)**

(72) Inventor: **DeNicola Jr., Anthony J.
16 Grayfox Ridge,
New Castle County
Newark,
Delaware 19713 (US)**

(74) Representative: **Dr. Fuchs, Dr. Luderschmidt
Dr. Mehler, Dipl.-Ing Weiss Patentanwälte
Postfach 46 60
D-65036 Wiesbaden (DE)**

**Description**

This invention relates to grafted copolymers comprising a propylene polymer material backbone having improved impact resistance.

Propylene polymer materials having a combination of good impact resistance and transparency are desirable in various applications.

Polypropylene homopolymer, has low impact and poor transparency. In an attempt to improve the impact resistance of polypropylene homopolymer, various methods have been employed, such as impact modifying polypropylene with various types of rubbers. While this method increases the impact resistance of polypropylene the transparency is much worse, due to the fact that the addition of the rubber causes cloudiness of the material.

Propylene random copolymers have low impact resistance, but good transparency. The impact resistance has been improved by impact modifying with rubbers, but at the expense of the transparency.

It has been found that graft copolymers having a propylene polymer material backbone can be produced having improved impact resistance without decreasing clarity by grafting said backbone with at least two different copolymerizable monomers which forms a random structure or copolymer chain having a Tg below 20°C and a refractive index which essentially matches the refractive index of the backbone. The grafted copolymers are useful as stand-alone structural plastics for injection molding articles and extruded profiles and articles.

According to the present invention, there is provided a grafted copolymer comprising a propylene polymer material backbone, as the matrix phase, grafted with at least two different copolymerizable monomers which form a random copolymer chain having a Tg below 20°C and a refractive index which essentially matches the refractive index of the propylene polymer material backbone, as the dispersed phase, wherein said copolymerizable monomers consist of at least one monomer which produces a polymer having a refractive index higher than the refractive index of the propylene polymer material backbone and at least one monomer which produces a polymer having a refractive index lower than the refractive index of propylene polymer material backbone.

In another embodiment of the present invention, there is provided a grafted copolymer comprising a propylene polymer material backbone, as the matrix phase, grafted with at least two different copolymerizable monomers which form a random copolymer chain having a Tg below 20°C and a refractive index which essentially matches the refractive index of the propylene polymer material, as the dispersed phase, wherein said copolymerizable monomers consist of at least one monomer which produces a polymer having a refractive index higher than the refractive index of the propylene polymer material backbone and at least one monomer which produces a polymer having a refractive index lower than the refractive index of the propylene polymer material backbone, further comprising a nucleating agent.

As used herein "essentially matches the refractive index of the propylene polymer material backbone" means that the difference between the refractive index of the propylene polymer material backbone, matrix phase, and the refractive index of the copolymer chain resulting from the copolymerizable monomers, dispersed phase, is from 0 to 0.05, preferably from 0 to 0.02.

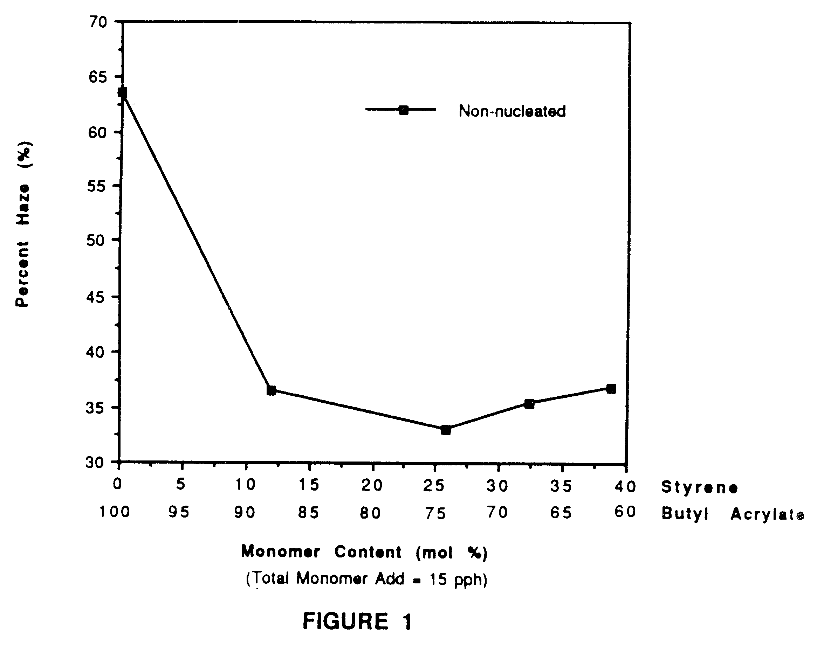

Figure 1 is a plot of the percent haze versus the mole percent styrene and butyl acrylate monomer level of a non-nucleated random copolymer of ethylene/propylene grafted with styrene/butyl acrylate copolymer.

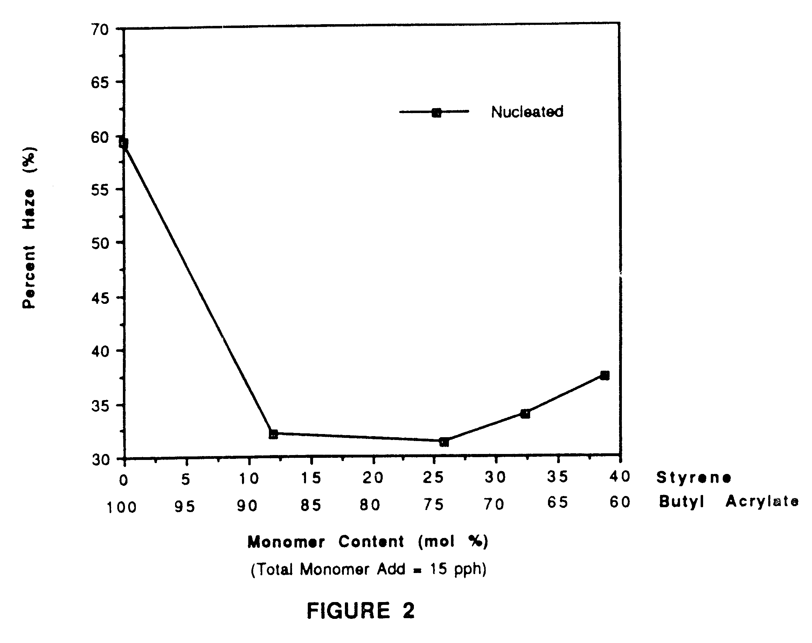

Figure 2 is a plot of the percent haze versus the mole percent styrene and butyl acrylate monomer level of a nucleated random copolymer of ethylene/propylene grafted with styrene/butyl acrylate copolymer.

Unless otherwise specified all percentages and parts are by weight in this specification.

The propylene polymer material backbone can be (i) a homopolymer of propylene, (ii) a random copolymer of propylene and an olefin selected from ethylene and $C_4$-$C_{10}$ alpha-olefins, provided that, where the olefin is ethylene, the maximum polymerized ethylene content is about 10%, preferably about 4%, and when the olefin is a $C_4$-$C_{10}$ alpha-olefin, the maximum polymerized content thereof is about 20%, preferably about 16%, or (iii) a random terpolymer of propylene with two olefins selected from the group consisting of ethylene and $C_4$-$C_8$ alpha-olefins, provided that the maximum polymerized $C_4$-$C_8$ alpha-olefin content is about 20%, preferably about 16%, and when ethylene is one of said olefins, the maximum polymerized ethylene content is about 5%, preferably about 4%.

The $C_4$-$C_{10}$ alpha-olefins include linear or branched $C_4$-$C_{10}$ alpha-olefins such as 1-butene, 1-pentene, 4-methyl-1-pentene, 3-methyl-1-butene, 1-hexene-3,4-dimethyl-1-butene, 1-heptene and 3-methyl-5-hexene.

Preferred propylene backbones are polypropylene and ethylene/propylene random copolymer.

Suitable particulate forms of the propylene polymer material include powder, flake, granulate, spherical and cubic. Free flowing powders and spherical form particles are preferred.

Such propylene polymer materials are commercially available from HIMONT U.S.A., Inc.

The copolymerizable monomers useful in the present invention for grafting onto the propylene polymer material backbone are those monomers which when combined form a random structure or copolymer chain having a refractive index that essentially matches that of the propylene polymer material backbone and has a Tg below 20°C. When the copolymerizable monomers consist of two monomers, one of the monomers selected must produce a polymer having a refractive index higher than that of the backbone and the other monomer selected must produce a polymer having a refractive index lower than that of the backbone. When the copolymerizable monomers consist of three or more monomers, at least one of the monomers selected must produce a polymer which has a refractive index higher than that of the propylene polymer material backbone and at least one of the monomers selected must produce a polymer which has a refractive index lower than that of the propylene polymer material backbone. The other monomer(s) may be selected from monomer(s) which produce polymers having a high or low refraction index.

In accordance with the present invention, the monomers which produce polymers having a refractive index higher than that of the propylene polymer backbone material are those monomers which when polymerized by themselves produce homopolymers having a refractive index greater than 1.503, preferably from about 1.510 to 1.600, and most preferably from 1.568 to 1.597. Examples of said monomers include styrene, alpha-methylstyrene, $C_{1-4}$ linear or branched alkyl or alkoxy ring substituted styrene such as p-methoxystyrene and p-methylstyrene, phenyl methacrylate, benzyl methacrylate, o-methoxyphenyl methacrylate, 2-hydroxyethyl methacrylate and acrylonitrile.

The monomers which produce polymers that have a refractive index lower than that of the propylene polymer backbone material are those monomers which when polymerized by themselves produce homopolymers having a refractive index less than 1.503, preferably from about 1.400 to 1.490, and most preferably from 1.450 to 1.475. Examples of said monomers include butyl acrylate, ethyl acrylate, 2-methoxy ethyl acrylate, 2-ethoxy ethyl acrylate, methyl methacrylate, ethyl methacrylate, n-propyl methacrylate, methyl acrylate, n-propyl acrylate, n-butyl acrylate, 3-methoxy propyl acrylate, 3-ethoxy propyl acrylate, 2-ethyl hexyl acrylate, ethenyl methyl ether, ethenyl ethyl ether, ethenyl butyl ether, ethenyl hexyl ether, ethenyl octyl ether and ethenyl 2-ethylhexyl ether.

Preferred copolymerizable monomers are styrene/butyl acrylate, styrene/2-ethoxy ethyl acrylate, p-methoxystyrene/butyl acrylate, p-methoxystyrene/2-ethoxy ethyl acrylate and styrene/butyl acrylate/acrylonitrile.

The grafted propylene polymer material of the present invention is prepared by the free radical-initiated graft polymerization of at least two monomers as set forth above, at free radical sites on the propylene polymer material backbone. The free radical sites may be produced by irradiation or by a free radical generating chemical material, e.g., by reaction with a suitable organic peroxide.

According to the method where the free radical sites are produced by irradiation, the propylene polymer material, preferably in particulate form, is irradiated at a temperature in the range of about 10°C to 85°C with high-energy ionizing radiation to produce free radical sites in the propylene polymer material. The irradiated propylene polymer material, while maintained in a substantially non-oxidizing atmosphere, e.g., under inert gas, is then treated at a temperature up to about 100°C for a period of at least about 3 minutes, with about from 5 to 60 pph of the particular grafting monomers used, based on the total weight of propylene polymer material and grafting monomers. After the propylene polymer material has been exposed to the monomers for the selected period of time, simultaneously or successively in optional order, the resultant grafted propylene polymer material, while still maintained in a substantially non-oxidizing environment, is treated to deactivate substantially all of the residual free radicals therein, and any unreacted grafting monomer is removed from said material.

The free radical deactivation of the resulting graft copolymer is conducted preferably by heating, although it can be accomplished by the use of an additive, e.g., methylmercaptan, that functions as a free radical trap. Typically the deactivation temperature will be at least 100°C, preferably at least 110°C. Heating at the deactivation temperature for at least 20 minutes is generally sufficient.

Any unreacted grafting monomer is removed from the graft copolymer, either before or after the radical deactivation, or at the same time as deactivation. If the removal is effected before or during deactivation, a substantially non-oxidizing environment is maintained.

The expression "substantially non-oxidizing", when used herein to describe the environment or atmosphere to which the olefin polymer material is exposed, means an environment in which the active-oxygen concentration, i.e., the concentration of oxygen in a form that will react with the free radicals in the polymer material, is less than about 15%, preferably less than about 5%, and most preferably less than about 1%, by volume. The most preferred concentration of active oxygen is 0.004% or lower by volume. Within these limits, the non-oxidizing atmosphere can be any gas, or mixture of gases, which is oxidatively

3

inert toward the free radicals in the olefin polymer material, e.g., nitrogen, argon, helium, and carbon dioxide.

In the method where the free radical sites are produced by an organic chemical compound, the organic chemical compound, preferably an organic peroxide, is a free radical polymerization initiator which has a decomposition half-life of about 1 to 240 minutes at the temperature employed during the treatment. Suitable organic peroxides include acyl peroxides, such as benzoyl and dibenzoyl peroxides; dialkyl and aralkyl peroxides, such as di-tert-butyl peroxide, dicumyl peroxide, cumyl butyl peroxide, 1,1-di-tert-butylperoxy-3,5,5-trimethyl-cyclohexane, 2,5-dimethyl-2,5-di-tert-butyl-peroxyhexane, and bis(alpha-tert-butylperoxyisopropylbenzene); peroxy esters, such as tert-butylperoxypivalate, tert-butyl perbenzoate, 2,5-dimethylhexyl-2,5-di(perbenzoate), tert-butyl-di(perphthalate), tert-butylperoxy-2-ethylhexanoate; and 1,1-dimethyl-3-hydroxybutylperoxy-2-ethylhexanoate; and peroxy carbonates, such as di(2-ethylhexyl)peroxy dicarbonate, di(n-propyl) peroxy dicarbonate, and di(4-tert-butylcyclohexyl)peroxy dicarbonate. The peroxides can be used neat or in a diluent medium, having an active concentration of from 0.1 to 6.0 pph, preferably from 0.2 to 3.0 pph.

According to this method, the propylene polymer material, preferably in particulate form, at a temperature of from about 60°C to 125°C is treated with from 0.1 to 6.0 pph of a free radical polymerization initiator described above. The polymer material is treated with about 5 to 60 pph of grafting comonomers at a rate of addition that does not exceed 4.5 pph per minute at all addition levels of 5 to 60 pph of the monomer, over a period of time which coincides with, or follows, the period of treatment with the initiator. In other words, the comonomers and initiator may be added to the heated propylene polymer material at the same time or the comonomer may be added 1) after the addition of the initiator has been completed, 2) after the addition of the initiator has started but has not yet been completed, or 3) after a delay time or hold time subsequent to the completion of the initiator addition.

After the propylene polymer material has been grafted the resultant grafted propylene polymer material, while still maintained in a substantially non-oxidizing environment, is treated, preferably by heating at a temperature of at least 100°C for at least 20 minutes, to decompose any unreacted initiator and deactivate residual free radicals therein. Any unreacted grafting compounds are removed from said material, either before or after the radical deactivation, or at the same time as deactivation.

The grafted copolymer of propylene polymer material has from 5 to 60 pph of the compounds grafted or graft copolymerized thereto, and preferably from 10 to 40 pph.

In another embodiment the grafted copolymer of the present invention may also contain a nucleating agent to further increase the clarity. Examples of nucleating agents which can be used in the present invention include bis-benzylidene sorbitol, bis(p-ethybenzylidene)sorbitol, bis(tolulidene)sorbitol, sodium bis-(p-tert-butylphenyl)-phosphate and sodium benzoate. The preferred nucleating agent is bis-benzylidene sorbitol.

In accordance with the present invention, the nucleating agent is present in an amount of from about 0.02 to 0.50 parts per 100 parts of the grafted copolymer and, preferably from about 0.05 to 0.30 parts.

The nucleating agent can be incorporated into the grafted copolymer by physically blending the materials in conventional mixing equipment, i.e., a single or twin screw extruder, Banbury mixer or any other conventional melt compounding equipment.

The present invention will be illustrated in greater detail with reference to the examples of the invention set forth below.

All physical test specimens were conditioned for 48 hours at 22.8°C (73°F) and 50% relative humidity.

The physical properties set forth in the Tables below were measured by the following methods:

| | |
|---|---|
| Haze percentage | Calculated from the ratio of total light transmittance to diffuse light transmittance at an observed, angle of 2°. The haze transmittance was measured on a Hunterlab Colorquest spectrocolorimeter using 7.62 cm x 7.62 cm x 0.10cm (3" x 3" x 0.040")plaques. |
| Notched Izod | ASTM D-256-87 |
| Flexural Modulus | ASTM D-790-86, Procedure A, (1,27 cm/min. (0.5 in/min.) crosshead speed and center section of a molded T-bar) |
| Flexural Strength | ASTM D-638, Procedure A, (center section of a molded T-bar) |
| Melt Flow Rate (MFR) | ASTM D-1238-82, Condition L |

Example 1

2996.4 g Pro-Fax SA-849 ethylene/propylene random copolymer having an ethylene content of about 4.0% were placed in a 10 liter steel reactor equipped with a heating jacket and a helical impeller. The

EP 0 522 233 B1

polymer was in the form of generally spherical particles having a nominal melt flow rate of 11 dg/min.

The reactor was purged with nitrogen gas at room temperature with stirring at 130 rpm, until the oxygen content of the reactor was less than 20 ppm. The contents of the reactor was then heated to 100°C by circulating hot oil through the reactor jacket, and equilibrated at that temperature while nitrogen purging and stirring was continued. Thereafter purging was stopped.

408.6 g butyl acrylate, 45.4 g styrene and 36.3 g mineral spirit solution of tert-butylperoxy-2-ethyl-hexanoate (50% by weight of mineral spirits) were added to a glass holding vessel and purged with nitrogen. The monomer/peroxide solution was fed to the reactor contents at a rate of 0.54 pph (parts per 100 parts of polypropylene, by weight) per minute while maintaining the temperature of the reactor contents at 100°C. The total addition time was 27.75 minutes. The reactor was maintained at 100°C with stirring for an additional 30 minutes following complete addition of the monomer. At the end of the grafting reaction period, a vacuum was drawn on the reactor contents and the temperature increased to 120°C. The total heat up time under vacuum was 16 minutes. Once the temperature reached 120°C, the vacuum was broken with nitrogen and the contents purged with nitrogen for 30 minutes. After cool down under a nitrogen blanket, the free-flowing solid product remaining in the reactor was discharged therefrom and weighed. Final weight of the product was 3332.4 g, representing a conversion of 74%. Melt flow rate of the product was 15 dg/min.

The grafted copolymer obtained above and a stabilizing package consisting of 0.03 weight % DHT-4A®, a hydrotalcite-like compound, and 0.12 weight % Irganox B-225 stabilizer were blended in a Henschel mill until a homogeneous blend was obtained. The blend was extruded at 235°C in a 25:1 L/D single screw extruder at 80 rpm.

The compounded mixture was injection molded in a 42.5 g (1.5 ounce), 25 ton Battenfeld injection molding machine using a flat 232°C barrel temperature profile. The molding cycle for the tensile bars consisted of 10 second injection time, 20 second cooling time, and 2 second mold opening time, with a maximum injection speed of 1 second and a screw speed setting of 60 rpm.

The physical properties are set forth below in Table 1.

Control 1

2996.4 g Pro-Fax SA-849 ethylene/propylene random copolymer having an ethylene content of about 4.0% and a stabilizing package consisting of 0.03 wt. % DHT-4A® a hydrotalcite-like compound and 0.12 wt. % Irganox B-225 stabilizer were compounded according to the method in Example 1. The physical properties are set forth below in Table 1.

Example 2

The procedure and ingredients of Example 1 were used except that 354.12 g butyl acrylate, 99.9 g styrene and 36.3 g mineral spirit solution of tert-butylperoxy-2-ethyl-hexanoate (50% by weight of mineral spirits) were added to the holding glass vessel. Total addition time was 26.67 minutes for an addition rate of 0.56 pph/min. The final product weight was 3332.4 g, representing a conversion of 74%. Melt flow rate of the product was 13.1 dg/min. The physical properties are set forth below in Table 1.

Control 2

The procedure and ingredients of Example 1 were used except that 454 g butyl acrylate and 36.3 g mineral spirit solution of tert-butylperoxy-2-ethylhexanoate (50% by weight of mineral spirits), without styrene, were added to the holding glass vessel. Total addition time was 18.3 minutes for an addition rate of 0.83 pph/min. Final weight of the product was 3414 grams, representing a conversion of 92%. Melt flow rate of the product was 25 dg/min. The physical properties are set forth below in Table 1.

Control 3

15 pph (parts per 100 parts Pro-Fax SA-849 copolymer by weight) of Dutral CO-059® ethylene/propylene copolymer rubber having an ethylene content of 57% were blended with the ingredients of Control 1 in a Henschel mill until a homogeneous blend was obtained. The blend was extruded at 230°C in a 30.34 mm co-rotating twin screw extruder, 28:1 L/D, at 350 rpm, using a shear intensive screw design. The product had a MFR of 11.9 dg/min. The physical properties are set forth below in Table 1.

Example 3

The procedure and ingredients of Example 1 are used except that 326.9 g butyl acrylate, 127.1 g styrene and a 363 g mineral spirit solution of tert-butylperoxy-2-ethylhexanoate (50% by weight mineral spirits) are added to the glass holding vessel. Total addition time was 29.25 minutes for an addition rate of 0.51 pph/min. The final product weight was 3314.2 grams, representing a conversion of 70%. Melt flow rate of the product was 15 dg/min. The physical properties are set forth below in Table 1.

Example 4

The procedure and ingredients of Example 1 are used except that 299.6 g butyl acrylate, 154.4 g styrene and 36.3 g mineral spirit solution of tert-butylperoxy-2-ethylhexanoate (50% by weight mineral spirits) are added to the glass holding vessel. Total addition time was 34.8 minutes for an addition rate of 0.43 pph/min. The final product weight was 3332.4 grams, representing a conversion of 74%. Melt flow rate of the product was 11.5 dg/min.

Example 5

The procedure and ingredients of Example 1 are used except that 363.2 g 2-ethoxyethyl acrylate, 90.8 g styrene and 36.5 g mineral spirit solution of tert-butylperoxy 2-ethylhexanoate (50% by weight mineral spirits) are added to the glass holding vessel. Total addition time was 26.3 minutes for an addition rate of 0.57 pph/min. The final product weight was 3377.8 grams, representing a conversion of 84%. Melt flow rate of the product was 11.6 dg/min. The physical properties are set forth below in Table 1.

Example 6

The procedure and ingredients of Example 1 are used except that 317.8 g butyl acrylate, 136.2 g para-methoxy styrene and 36.3 g mineral spirit solution of tert-butylperoxy-2-ethylhexanoate(50% by weight mineral spirits) are added to the glass holding vessel. Total addition time was 30 minutes for an addition rate of 0.50 pph/min. The final product weight was 3550.3 grams, representing a conversion of 100%. Melt flow rate of the product was 14.0 dg/min. The physical properties are set forth below in Table 1.

## Table 1

| | Control | | | Example | | | | | |
|---|---|---|---|---|---|---|---|---|---|
| | 1 | 2 | 3 | 1 | 2 | 3 | 4 | 5 | 6 |
| Haze, % | 42.2 | 63.7 | 84.8 | 36.5 | 33.0 | 35.4 | 36.8 | 25.9 | 39.2 |
| Notched Izod at 23°C, kJ/m | 0.027 | 0.096 | 0.048 | 0.128 | 0.118 | 0.075 | 0.080 | 0.107 | 0.075 |
| ft-lb/in. | 0.5 | 1.8 | 0.9 | 2.4 | 2.2 | 1.4 | 1.5 | 2.0 | 1.4 |
| Flex Modulus, kg/cm² | 9,437 | 8,430 | 7,775 | 9,169 | 8,838 | 9,289 | 9,289 | 8,986 | 8,634 |
| psi | 134,000 | 119,700 | 110,400 | 130,200 | 125,500 | 131,900 | 131,900 | 127,600 | 122,600 |
| Flex Strength, kg/cm² | 364 | 314 | 270 | 334 | 325 | 339 | 335 | 329 | 320 |
| psi | 5,165 | 4,455 | 3,840 | 4,745 | 4,610 | 4,810 | 4,760 | 4,665 | 4,550 |

## Example 7

The procedure and ingredients of Example 1 were used except that 0.25% a nucleating agent, bis-benzylidene sorbitol, was added along with the stabilizing package. The physical properties are set forth in Table 2.

7

Example 8

The procedure and ingredients of Example 5 were used except that 0.25% of a nucleating agent, bis-benzylidene sorbitol, was added together with the stabilizing package. The physical properties are set forth in Table 2.

Example 9

The procedure and ingredients of Example 6 were used except that 0.25% of a nucleating agent, bis-benzylidene sorbitol, was added together with the stabilizing package. The physical properties are set forth in Table 2.

Table 2

| | | Example | | |
|---|---|---|---|---|
| | | 7 | 8 | 9 |
| Haze, % | | 32.0 | 27.3 | 38.9 |
| Notched Izod at 23°C, | kJ/m | 0.144 | 0.102 | 0.070 |
| | ft-lb/in. | 2.7 | 1.9 | 1.3 |
| Flex Modulus, | kg/cm$^2$ | 8,887 | 9,141 | 8,986 |
| | psi | 126,200 | 129,800 | 127,600 |
| Flex Strength, | kg/cm$^2$ | 324 | 327 | 325 |
| | psi | 4,600 | 4,645 | 4,610 |

Example 10

Pro-Fax 6501® propylene homopolymer, 27.3 kg, was placed into a 130 liter horizontal steel reactor equipped with a heating jacket and plow blade mixing elements. The polymer was a free flowing powder with a nominal melt flow rate of 4.0 dg/min.

Oxygen was purged from the reactor and its contents by repeated pressurization to 2.46 kg/cm$^2$ (35 psi) with nitrogen and venting to atmospheric pressure. This procedure was repeated four times. Stirring was initiated at 130 rpm and the temperature of the reactor contents was increased to 100°C by applying steam to the reactor jacket.

An oxygen free mineral spirit solution of tert-butylperoxy-2-ethylhexanoate (341 grams of solution, 50% by weight of mineral spirits) was added to a steel pressure cylinder and purged with nitrogen. 717.3 g styrene and 4054.2 g butyl acrylate are both charged to a second steel pressure cylinder and purged with nitrogen.

The mineral spirit solution of tert-butylperoxy-2-ethyl hexanoate was charged to the agitated reactor contents over the cursor of five minutes. After ten minutes of agitation of the polymer/peroxide mixture maintained at rate of 0.88 pph (parts per 100 parts polypropylene, by weight) per minute. The total addition time was 20 minutes. The reactor was maintained at 100°C and agitation continued for three hours after all of the monomer had been added.

At the end of the grafting reaction period, a vacuum was drawn on the reactor contents and held for one hour. The vacuum was then broken with nitrogen and the contents purged with nitrogen at 100°C for four hours.

After cool down under a nitrogen blanket, the free flowing solid product remaining in the reactor was discharged there from and weight. Final weight of the product was 30.91 kg, representing a conversion of 76%. Melt flow rate of the product was 7.2 dg/min.

The grafted copolymer obtained above and a stabilizing package consisting of 0.03 weight % DHT-4A® a hydrotalcite-like compound and 0.12 weight % Irganox B-225 stabilizer were blended in a Henschel mill until a homogeneous blend was obtained. The blend was extruded at 235°C barrel temperature profile. The molding cycle for the tensile bars consisted of 10 second injection time, 20 second cooling time, and 2 second mold opening time, with a maximum injection speed of 1 second and a screw speed setting of 60 rpm. The physical properties are set forth below in Table 3.

Control 4

27 kg Pro-Fax 6501® propylene homopolymer and stabilizing package consisting of 0.03 weight % DHT-4A® hydrotalcite-like compound and 0.12 weight % Irganox B-225 stabilizer were compounded according to the method in Example 10. The physical properties are set forth below in Table 3.

Control 5

15 pph (parts per 100 parts Pro-Fax 6301® propylene homopolymer, by weight) of Dutral CO-059® ethylene/propylene copolymer rubber having an ethylene content of 57% were blended with the ingredients of Control 4, except that Pro-Fax 6301® propylene homopolymer was used instead of Pro-Fax 6501® propylene homopolymer, in a Henschel mill until a homogeneous blend was obtained. The blend was extruded at 230°C in a 30.34 mm co-rotating twin screw extruder, 28:1 L/D, at 350 rpm, using a shear intensive screw design. The product had a MFR of 12.7 dg/min. The physical properties are set forth below in Table 3.

Example 11

The procedure and ingredients of Example 10 were used except that 0.25% of a nucleating agent, bis-benzylidene sorbitol, was added along with the stabilizing package. The physical properties are set forth in Table 3.

Table 3

|  |  | Control | | Example | |
|---|---|---|---|---|---|
|  |  | 4 | 5 | 10 | 11 |
| Haze, % |  | 45.8 | 85.0 | 52.4 | 48.2 |
| Notched Izod at 23°C, | kJ/m<br>ft-lb/in. | 0.032<br>0.6 | 0.048<br>0.9 | 0.144<br>2.7 | 0.225<br>4.2 |
| Flex Modulus, | kJ/cm$^2$<br>psi | 15,641<br>222,100 | 11,451<br>162,600 | 12,225<br>173,600 | 12,866<br>182,700 |
| Flex Strength, | kg/cm$^2$<br>psi | 543<br>7,705 | 375<br>5,330 | 418<br>5,940 | 421<br>5,985 |

Other features, advantages and embodiments of the invention disclosed herein will be readily apparent to those exercising ordinary skill after reading the foregoing disclosures.

**Claims**

1. A graft copolymer comprising a propylene polymer material backbone, as the matrix phase, grafted with at least two different copolymerizable monomers which form a random copolymer chain having a Tg below 20°C and a refractive index which essentially matches the refractive index of the propylene polymer material backbone, wherein the difference between the refractive index of the propylene polymer material backbone and the refractive index of said random copolymer chain is from 0 to 0.05, as the dispersed phase, wherein said copolymerizable monomers consist of at least one monomer which produces a homopolymer having a refractive index higher than the refractive index of the propylene polymer material backbone and at least one monomer which produces a homopolymer having a refractive index lower than the refractive index of the propylene polymer material backbone.

2. The graft copolymer of claim 1, wherein said propylene polymer material backbone is selected from the group consisting of a homopolymer of propylene, a random copolymer of propylene and an olefin selected from ethylene and $C_4$-$C_{10}$ alpha-olefins, and a random terpolymer of propylene and two olefins selected from ethylene and $C_4$-$C_8$ alpha-olefins.

**3.** The graft copolymer of claim 1, wherein said copolymerizable monomers which polymerize to produce homopolymers having a refractive index higher than the refractive index of the propylene polymer material are selected from the group consisting of styrene, $C_{1-4}$ linear or branched alkyl or alkoxy ring substituted styrene, alpha-methylstyrene, phenyl methacrylate, benzyl methacrylate, o-methoxyphenyl methacrylate and acrylonitrile.

**4.** The graft copolymer of claim 1, wherein the copolymerizable monomers which polymerize to produce homopolymers having a refractive index lower than the refractive index of the propylene polymer material are selected from the group consisting of butyl acrylate, 2-methoxy ethyl acrylate, 2-ethoxy ethyl acrylate, methyl methacrylate, ethyl methacrylate, methyl acrylate, 3-methoxypropyl acrylate, 3-ethoxypropyl acrylate, 2-ethylhexyl acrylate, ethenyl methyl ether, ethenyl ethyl ether, ethenyl butyl ether, ethenyl hexyl ether, ethenyl octyl ether and ethenyl-2-ethylhexyl ether.

**5.** The graft copolymer of claim 1, wherein the copolymerizable monomers are selected from the group consisting of styrene/butyl acrylate, styrene/2-ethoxyethyl acrylate, p-methoxystyrene/butyl acrylate, p-methoxystyrene/2-ethoxyethyl acrylate and styrene/butyl acrylate/acrylonitrile.

**6.** The graft copolymer of claims 1-5, wherein the graft copolymer is styrene/butyl acrylate on a polypropylene backbone, styrene/butyl acrylate on an ethylene/propylene random copolymer backbone, styrene/butyl acrylate on an ethylene/propylene/butene random terpolymer backbone, p-methoxystyrene/2-ethoxy ethyl acrylate on a polypropylene backbone, p-methoxystyrene/2-ethoxy ethyl acrylate on an ethylene/propylene random copolymer backbone or p-methoxystyrene/2-ethoxy ethyl acrylate on an ethylene/propylene/butene random terpolymer backbone.

**7.** The graft copolymer of claims 1-6, further comprising a nucleator in the amount of from 0.02 to 0.50 parts per 100 parts of grafted copolymer.

**8.** The graft copolymer of claim 7, wherein said nucleator is selected from the group consisting of bis-benzylidene sorbitol, bis(p-ethylbenzylidene)sorbitol, bis(tolulidene) sorbitol, sodium bis (p-tert-butylphenyl)-phosphate and sodium benzoate.

**Patentansprüche**

**1.** Pfropfcopolymer, umfassend eine Propylenpolymer-Material-Hauptkette als Matrixphase, die mit mindestens zwei verschiedenen copolymerisierbaren Monomeren gepfropft ist, die eine statistische Copolymerkette mit einem Tg unterhalb 20°C und einem im wesentlichen dem Brechungsindex der Propylenpolymer-Material-Hauptkette entsprechenden Brechungsindex als dispergierte Phase bilden, wobei die Differenz zwischen dem Brechungsindex der Propylenpolymer-Material-Hauptkette und dem Brechungsindex der statistischen Copolymerkette von 0 bis 0,05 beträgt und die copolymerisierbaren Monomeren aus mindestens einem Monomer, das ein Homopolymer mit einem Brechungsindex größer als der Brechungsindex der Propylenpolymer-Material-Hauptkette produziert, und mindestens einem Monomer, das ein Homopolymer mit einem Brechungsindex kleiner als der Brechungsindex der Propylenpolymer-Material-Hauptkette produziert, bestehen.

**2.** Pfropfcopolymer nach Anspruch 1, bei dem die Propylenpolymer-Material-Hauptkette ausgewählt ist aus der Gruppe, die aus einem Homopolymer von Propylen, einem statistischen Copolymer von Propylen und einem aus Ethylen und $C_4$-$C_{10}$-alpha-Olefinen ausgewälten Olefin sowie einem statistischen Terpolymer von Propylen und zwei aus Ethylen und $C_4$-$C_8$-alpha-Olefinen ausgewählten Olefinen besteht.

**3.** Pfropfcopolymer nach Anspruch 1, bei dem die copolymerisierbaren Monomeren, die polymerisieren, um Homopolymere mit einem Brechungsindex größer als der Brechungsindex des Propylenpolymer-Materials zu produzieren, ausgewählt sind aus der Gruppe, die aus Styrol, $C_{1-4}$-linear- oder -verzweigt-, -alkyl- oder -alkoxy-ringsubstituiertem Styrol, alpha-Methylstyrol, Phenylmethacrylat, Benzylmethacrylat, o-Methoxy-phenyl-methacrylat und Acrylnitril besteht.

**4.** Pfropfcopolymer nach Anspruch 1, bei dem die copolymerisierbaren Monomeren, die polymerisieren, um Homopolymere mit einem Brechungsindex kleiner als der Brechungsindex des Propylenpolymer-Materials zu produzieren, ausgewählt sind aus der Gruppe, die aus Butylacrylat, 2-Methoxy-ethyl-acrylat, 2-Ethoxy-ethyl-acrylat, Methylmethacrylat, Ethylmethacrylat, Methylacrylat, 3-Methoxypropyl-acrylat, 3-Ethoxypropyl-acrylat, 2-Ethylhexyl-acrylat, Ethenyl-methyl-ether, Ethenyl-ethyl-ether, Ethenyl-butyl-ether, Ethenyl-hexyl-ether, Ethenyl-octyl-ether und Ethenyl-2-ethylhexyl-ether besteht.

5. Pfropfcopolymer nach Anspruch 1, bei dem die copolymerisierbaren Monomeren ausgewählt sind aus der Gruppe, die aus Styrol/Butylacrylat, Styrol/2-Ethoxy-ethyl-acrylat, p-Methoxystyrol/Butylacrylat, p-Methoxystyrol/2-Ethoxyethylacrylat und Styrol/Butylacrylat/Acrylnitril besteht.

6. Pfropfcopolymer nach Anspruch 1-5, bei dem das Pfropfcopolymer Styrol/Butylacrylat auf einer PolypropylenHauptkette, Styrol/Butylacrylat auf einer Hauptkette aus statistischem Ethylen/Propylen-Copolymer, Styrol/Butylacrylat auf einer Hauptkette aus statistischem Ethylen/Propylen/Buten-Terpolymer, p-Methoxystyrol/2-Ethoxy-ethyl-acrylat auf einer Polypropylen-Hauptkette, p-Methoxystyrol/2-Ethoxy-ethyl-acrylat auf einer Hauptkette aus statistischem Ethylen/Propylen-Copolymer oder p-Methoxystyrol/2-Ethoxy-ethyl-acrylat auf einer Hauptkette aus statistischem Ethylen/Propylen/Buten-Terpolymer ist.

7. Pfropfcopolymer nach Anspruch 1-6, weiterhin einen Keimbildner in der Menge von 0,02 bis 0,50 Teilen pro 100 Teile gepfropftes Copolymer umfassend.

8. Pfropfcopolymer nach Anspruch 7, bei dem der Keimbildner ausgewählt ist aus der Gruppe, die aus Bis-benzyliden-sorbit, Bis-(p-ethylbenzyliden)-sorbit, Bis-(toluyliden)-sorbit, Natrium-bis-(p-tert-butylphenyl)-phosphat und Natriumbenzoat besteht.

**Revendications**

1. Copolymère greffé comprenant un squelette polymère de propylène, comme phase matrice, greffé par au moins deux monomères copolymérisables différents, qui forment une chaîne copolymère statistique ayant une Tg inférieure à 20°c et un indice de réfraction qui est essentiellement égal à l'indice de réfraction du squelette polymère de propylène, où la différence entre l'indice de réfraction du squelette polymère de propylène et l'indice de réfraction de la chaîne de copolymère statistique se situe entre 0 et 0,05, comme phase dispersée, dans lequel les monomères copolymérisables consistent en au moins un monomère qui produit un homopolymère ayant un indice de réfraction supérieur à l'indice de réfraction du squelette polymère de propylène et au moins un monomère qui produit un homopolymère ayant un indice de réfraction inférieur à l'indice de réfraction du squelette polymère de propylène.

2. Copolymère greffé suivant la revendication 1, dans lequel le squelette polymère de propylène est choisi parmi le groupe consistant en un homopolymère de propylène, un copolymère statistique de propylène et d'une oléfine choisie parmi l'éthylène et les alpha-oléfines en $C_4$-$C_{10}$, et un terpolymère statistique de propylène et de deux oléfines choisies parmi l'éthylène et les alpha-oléfines en $C_4$-$C_8$.

3. Copolymère greffé suivant la revendication 1, dans lequel les monomères copolymérisables qui polymérisent pour produire des homopolymères ayant un indice de réfractions supérieur à l'indice de réfraction de la matière polymère de propylène, sont choisis parmi le groupe consistant en styrène, styrène substitué sur le cycle par alcoyle ou alkoxy en $C_1$-$C_4$ linéaire ou branché, alphaméthylstyrène, méthacrylate de phényle, méthacrylate de benzyle, méthacrylate d'o-méthoxyphényle et acrylonitrile.

4. Copolymère greffé suivant la revendication 1, dans lequel les monomères copolymérisables qui polymérisent pour produire des homopolymères ayant un indice de réfraction inférieur à l'indice de réfraction de la matière polymère de propylène, sont choisis parmi le groupe consistant en acrylate de butyle, acrylate de 2-méthoxyéthyle, acrylate de 2-éthoxyéthyle, méthacrylate de méthyle, méthacrylate d'éthyle, acrylate de méthyle, acrylate de 3-méthoxypropyle, acrylate de 3-éthoxypropyle, acrylate de 2-éthylhexyle, éthènylméthyléther, éthènyléthyléther, éthènylbutyléther, éthènylhexyléther, éthènyloctyléther et éthènyl-2-éthylhexyléther.

5. Copolymère greffé suivant la revendication 1, dans lequel les monomères copolymérisables sont choisis parmi le groupe consistant en styrène/acrylate de butyle, styrène/acrylate de 2-éthoxyéthyle, p-méthoxystyrène/acrylate de butyle, p-méthoxystyrène/acrylate de 2-éthoxyéthyle et styrène/acrylate de butyle/acrylonitrile.

**6.** Copolymère greffé suivant les revendications 1 à 5, dans lequel le copolymère greffé est le styrène/acrylate de butyle sur un squelette polypropylène, le styrène/acrylate de butyle sur un squelette copolymère statistique d'éthylène/propylène, le styrène/acrylate de butyle sur un squelette terpolymère statistique d' éthylène/propylène/butène, le p-méthoxystyrène/acrylate de 2-éthoxyéthyle sur un squelette polypropylène, le p-méthoxystyrène/acrylate de 2-éthoxyéthyle sur un squelette copolymère statistique d'éthylène/propylène ou le p-méthoxystyrène/acrylate de 2-éthoxyéthyle sur un squelette terpolymère statistique d'éthylène/propylène/butène.

**7.** Copolymère greffé suivant les revendications 1 à 6, comprenant en outre, un agent de nucléation en la quantité de 0,02 à 0,50 partie par 100 parties de copolymère greffé.

**8.** Copolymère greffé suivant la revendication 7, dans lequel l'agent de nucléation est choisi parmi le groupe consistant en bis-benzylidènesorbitol, bis-(p-éthylbenzylidène)sorbitol, bis-(tolulidène)sorbitol, bis-(p-t-butylphényl)phosphate de sodium et benzoate de sodium.

FIGURE 1

EP 0 522 233 B1

FIGURE 2